Europäisches Patentamt

European Patent Office

Office européen des brevets

(11) Publication number: **0 349 280**
**A2**

# EUROPEAN PATENT APPLICATION

(21) Application number: 89306537.5

(51) Int. Cl.5: **B 60 Q 3/04**

(22) Date of filing: 27.06.89

(30) Priority: 29.06.88 GB 8815501

(43) Date of publication of application:
03.01.90 Bulletin 90/01

(84) Designated Contracting States: DE FR GB IT

(71) Applicant: LUCAS INDUSTRIES public limited company
Great King Street
Birmingham, B19 2XF West Midlands (GB)

(72) Inventor: Harris, Paul Anthony
45 Newland Mill
Witney Oxon (GB)

Scott, Jamie Bodley
Fir Tree Cottage Lower Town
Fern Hill Heath Worcester (GB)

(74) Representative: Goodman, Christopher et al
Eric Potter & Clarkson 14 Oxford Street
Nottingham NG1 5BP (GB)

(54) Instrument lighting for vehicles.

(57) Bright and dim instrument lighting for vehicles is provided by illuminating a first illumination source to provide the dim instrument lighting and a first and second illumination source to provide the bright instrument lighting.

Fig. 3

**Description**

## INSTRUMENT LIGHTING FOR VEHICLES

The present invention relates to instrument lighting for vehicles and more particularly to backlighting of vehicle instruments such as LCD displays, clocks, trip computers radio displays etc.

A recent requirement is for illumination to be bright during daylight hours when the vehicle is in use but to be dim during night or evening hours to reduce glare for the driver. This requirement is met in a known control system by using the side light and ignition switches in combination to produce the two conditions.

It has now become desirable to provide an additional mode of lighting such that illumination is provided at the dim level when the vehicle is not in use (ignition off) but the sidelights are on. This therefore enables the driver and passengers to see for example the displayed time, radio display and trip computer etc. without having to turn the ignition on.

This is accomplished in a known system by utilising three separate current supply paths for the illumination source (lamp) and controlling the flow of current in these paths by uni-directional current devices (diodes) which are responsive to the operation of the sidelight and ignition switches. This known circuit has disadvantages because malfunction of one or more of the diodes can result in damage to the vehicle wiring or other components.

It is an object of the present invention to provide an improved instrument lighting system for vehicles.

According to the present invention there is provided an instrument lighting system for vehicles including a first illumination source and a second illumination source and including means for energising one of the two illumination sources to provide dim instrument lighting and means for energising both of the illumination sources to provide bright instrument lighting.

Preferably the means for energising the illumination source includes a sidelight switch and a vehicle ignition switch.

In a preferred embodiment the first and second illumination sources each have two terminals and are connected in series, one terminal of the first illumination source being connected to the output terminal of the sidelight switch, the common terminals of the first and second illumination sources being connected to the output terminal of the ignition switch and the other terminal of the second illumination source is connected to the vehicle ground.

Preferably the first and second illumination sources are incandescent lamps of identical type.

Embodiments of the present invention will now be described, by way of example with reference to the accompanying drawings in which:-

Figure 1 shows a basic known instrument lighting system for a vehicle;

Figure 2 shows an improved known instrument lighting system for a vehicle; and

Figure 3 shows an improved lighting system for a vehicle according to the present invention.

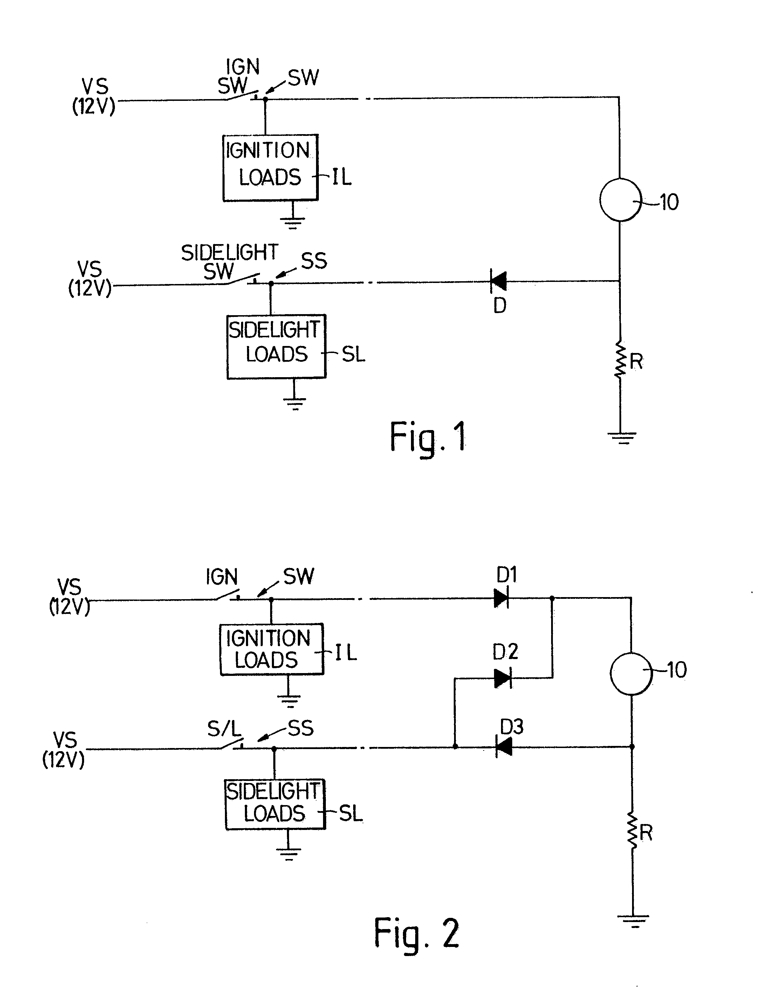

With reference now to Figure 1, an illumination source 10 is provided for background lighting of instruments in a vehicle. The light from the source 10 may be conveyed in known manner to illuminate a plurality of instruments. Source 10 is in a preferred embodiment an incandescent lamp and will hereinafter be referred to as a lamp.

Two sources of supply voltage VS (12 volts) are provided via ignition switch SW and sidelight switch SS. Ignition loads IL and sidelight loads SL are shown diagramatically as blocks. These loads represent low impendances to ground.

One terminal of lamp 10 is connected to the output terminal of switch SW. The other terminal of lamp 10 is connected to one terminal of a load resistor R the other terminal of which is grounded. A diode D has its anode connected to the junction of the resistor R and the lamp 10 and its cathode connected to the output terminal of sidelight switch SS.

The circuit operates as follows. With only SW closed lamp 10 is illuminated by a current path through D and the low impedance sidelight loads thus giving a large current flow and bright light output from lamp 10. When switch SS is closed diode D becomes non-conducting and the current path for lamp 10 is via resistor R to earth. By suitable choice of resistor R to be approximating to the resistance of the lamp 10, the current flow is significantly reduced and the lamp 10 is dimmed.

In the circuit of Figure 1 no illumination is provided if ignition switch SW is open but in Figure 2 in which the same reference numerals are used for similar components illumination is provided via diode D2. (Diode D1 is provided to isolate the ignition load from the sidelight switch and diode D3 is equivalent to diode D in Figure 1).

The circuit of Figure 2, although providing illumination when only sidelights (switch SS closed) are on has some serious disadvantages because of possible faults in diodes D1, D2 and D3. These are as follows.

Failure of D1 Short Circuit.

With the sidelights switched on it will not be possible to turn off the ignition supply to stop the engine via the ignition switch. Damage to D2 is also likely if the load drawn by ignition loads (e.g. Heated Rear Window) is too great and also possible damage to sidelight switch SS and/or harness.The current path for the illumination of lamp 10 will remain as described above.

Failure of D2 Short Circuit.

The sidelights are powered via ignition switch. Thus the sidelights will always be on when ignition is on. The illumination will always be dim.

Failure of D3 Short Circuit.

Resistor R will be connected across the vehicle supply when the sidelights are switched on. Excessive heat produced will destroy resistor R and damage to instruments or circuit board in close proximity may result. Illumination will be normal when sidelights off and zero when sidelights are on.

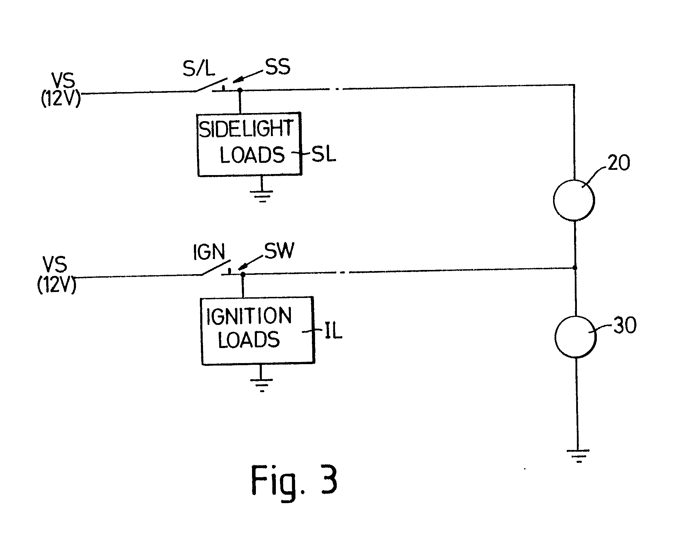

The above problems are overcome by the circuit of Figure 3 according to the present invention.

In this circuit two lamps 20 and 30 are provided each having half the power rating of lamp 10 (in Figures 1 and 2). For full illumination both lamps are powered (Ignition switch SW closed sidelight switch SS open). Current flowing from ignition switch SW via lamp 30 to ground and via lamp 20 and series sidelights loads SL to ground.

For half (dim) illumination in a first condition when both ignition and sidelights are on only lamp 30 is illuminated (Ignition switch SW closed and sidelight switch SS also closed). No current flows through lamp L1 since both of its terminals are nominally at the same potential (VS).

For half (dim) illumination in a second condition when only sidelights are on only lamp 20 is iluminated (Ignition switch SW open sidelight switch SS closed). Current flows from sidelight switch SS via lamp 20 and the series ignition loads to ground.

A small current will flow through lamp 30 to ground due to the ignition loads (IL) having a finite (low) resistance. However this current will be insufficient to cause illumination of lamp 30.

Thus the circuit of Figure 3 provides the three required lighting conditions without use of diodes and therefore eliminates the problems created by fault conditions in those diodes.

It will be appreciated that lamps 20 and 30 may be combined within the same glass envelope in a known manner.

In the foregoing description on those occasions when the instrument illumination lamp is connected to ground via the sidelight loads insufficient current flows in the circuit to cause illumination of the sidelights.

## Claims

1. An instrument lighting system for vehicles including a first illumination source and a second illumination source and including means for energising one of the two illumination sources to provide dim instrument lighting and means for energising both of the illumination sources to provide bright instrument lighting.

2. An instrument lighting system for vehicles as claimed in Claim 1 in which the means for energising the illumination source includes a sidelight switch and a vehicle ignition switch.

3. An instrument lighting system as claimed in Claim 2 in which the first and second illumination sources each have two terminals and are connected in series, in which one terminal of the first illumination source is connected to the output terminal of the sidelight switch, the common terminals of the first and second illumination sources being connected to the output terminal of the ignition switch and in which the other terminal of the second illumination source is connected to the vehicle ground.

4. An instrument lighting system for vehicles as claimed in any one of Claims 1 to 3 in which the first and second illumination sources are incandescent lamps of identical type.

Fig. 1

Fig. 2

VS
(12V)

S/L   SS

SIDELIGHT
LOADS — SL

20

VS
(12V)

IGN   SW

IGNITION
LOADS   IL

30

Fig. 3